(19) **Europäisches Patentamt**
**European Patent Office**
**Office européen des brevets**

(11) **EP 4 748 902 A1**

(12) **EUROPEAN PATENT APPLICATION**

(43) Date of publication:
**27.05.2026   Bulletin 2026/22**

(21) Application number: **24306973.9**

(22) Date of filing: **25.11.2024**

(51) International Patent Classification (IPC):
*C09J 189/00* (2006.01)    *C09J 197/00* (2006.01)
*C08L 97/00* (2006.01)    *C08L 89/00* (2006.01)

(52) Cooperative Patent Classification (CPC):
**C09J 189/00; C09J 197/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **EVERTREE**
**60280 Venette (FR)**

(72) Inventors:
- **MANGEON PASTORI, Carine**
  **94100 Saint Maur des Fossés (FR)**
- **BAILLARIN, Fadoua**
  **60410 Verberie (FR)**

(74) Representative: **Santarelli**
**Tour Trinity**
**1 bis Place de la Défense**
**92400 Courbevoie (FR)**

(54) **ADHESIVE COMPOSITION USEFUL FOR GLUING PLYWOOD**

(57)    The invention relates to an aqueous adhesive composition comprising a legume seed protein, an animal albumin, preferably ovalbumin, a lignin and an amine-based azetidinium-functional crosslinker

The invention also relates to a class 2 plywood and its preparation process using said adhesive composition.

EP 4 748 902 A1

## Description

### Field of the invention

The present invention relates to protein-based wood adhesive compositions, particularly useful for gluing plywood for use in humid conditions.

### Background of the Invention

Plywoods are wood-based panels made from rotary cut veneers or plies which are bonded together with an adhesive and hot-pressed. Commonly manufactured plywoods are 3-, 5- or 7-ply plywoods; the number referring to the number of veneers used to make a plywood. Processes and industrial equipment used to manufacture plywoods are described for example in: Wood-Based Panels - An Introduction for Specialists, COST Office, 2010, Published by Brunel University Press, ISBN 978-1-902316-82-6.

European standards EN 314-1 and -2 specifies respectively the bonding tests and quality requirements for bonding classes of plywood according to their end uses, in dry, humid or exterior conditions. Class 2 (humid conditions) plywoods are for protected external applications and damp internal uses and must have limited exposure to moisture during construction.

The development of biobased wood adhesives for reducing the dependence on fossil resources, without compromising the performances, has become a need due to more stringent environmental and human health safety regulations.

In some of the known biobased adhesives for manufacturing wood-based panels, plant protein raw material is used in combination with polyamidoamine-epihalohydrin resins. International application WO 2008/04444 A1 describes a wood adhesive composition comprising a low molecular weight thermosetting polyamidoamine-epichlorohydrin resin (PAE resin) and a soy protein or a lignin.

International application WO 2023/089202 A1 describes a wood adhesive composition comprising a ground pea seed and an amine-based azetidinium-functional cross-linker (such as PAE).

Furthermore it is known that ovalbumin can be used as a wood adhesive. Frihart et al. (Ovalbumin as a wood adhesive. In: The adhesion society's 37th annual meeting February, 23-26, 2014. San Diego, CA: Bahia Resort Hotel; 2014. p. 1-3) have found that the egg whites and purified ovalbumin give good bonds that hold up to wet conditions, and the performance is further improved by using 5% (solids/solids of protein material) polyamidoamine-epichlorohydrin (PAE) coreactant.

However, wood adhesive composition of the prior art comprising plant or animal proteins have a limited water resistance which prevents their use for producing class 2 plywoods.

Some solutions have been proposed to increase the water resistance of protein-based wood adhesives for producing class 2 plywoods.

Patent application CN 102719217 A discloses an aqueous protein-based wood adhesive composition for gluing plywood comprising 5 to 50% by weight plant protein-containing raw materials such as soy protein or pea protein powder, 10% to 40% by weight polyamidoamine-epichlorohydrin (PAE) resin, 5% to 50% fossil-based modifiers selected from polyacrylamide, polyvinyl alcohol, polyvinyl acetate, borax, ammonium thiosulfate, urea and isocyanate, 1% to 15% by weight acidity regulator to adjust the pH of the adhesive to 6 and optionally some additives such as at most 10% by weight fillers selected from diatomaceous earth and kaolin, bentonite, talc, sawdust, wheat flour, nut shell powder, bark powder, cellulose or lignin. No results regarding the properties of the produced class 2 plywood are shown in this document. Besides the PAE, this adhesive composition comprises 5% to 50% fossil-based modifiers. In addition, this document describes not to apply an alkaline pH to plant (soy) proteins because the protein will degrade within 24 hours at room temperature in the presence of water and oxygen, releasing a foul odor and rendering the adhesive ineffective.

Therefore, it appears from the foregoing that there is a need for improving the water resistance of eco-friendly protein-based adhesive compositions for producing class 2 plywoods.

### Invention summary

The inventors have surprisingly found that the use of an adhesive composition comprising a combination of legume seed protein, ovalbumin, an amine-based azetidinium-functional cross-linker and lignin allows obtaining plywoods having excellent adhesive properties and water resistance which meet the expected requirements for class 2 plywood (as used herein, class 2 is in reference to the European standards EN 314-1 and -2).

Therefore, the invention relates to an aqueous adhesive composition comprising or consisting of:

-   a legume seed protein,

- an animal albumin, preferably ovalbumin,
- a lignin,
- an amine-based azetidinium-functional cross-linker, and
- a base *(e.g.,* NaOH).

In particular, the invention relates to an aqueous adhesive composition comprising or consisting of:

- between 5 wt% and 60 wt% of a legume seed protein (preferably ground *Pisum* seed or *Vicia* seed protein concentrate), based on the total weight of the adhesive composition,
- between 1 wt% and 30 wt% of an animal albumin (preferably ovalbumin), based on the total weight of the adhesive composition,
- between 0.5 wt% and 15 wt% of a lignin (preferably Kraft lignin), based on the total weight of the adhesive composition,
- between 2 wt% and 20 wt% of an amine-based azetidinium-functional cross-linker (preferably polyamidoamine-epichlorohydrin cross-linker), based on the total weight of the adhesive composition, and
- a base *(e.g.,* NaOH).

By "aqueous adhesive composition" it is meant that in addition to the components described herein, the adhesive composition comprises water.

Advantageously, the pH of the adhesive composition is at least 9.5 and preferably comprised between 9.5 and 12, more preferably, between 10 and 12, even more preferably, between 10 and 11. In particular, the pH of the adhesive composition is adjusted depending on the optimum pH to solubilize the lignin in water at room temperature (25°C) and atmospheric pressure. In a preferred embodiment, the pH of the adhesive composition is 10. The pH can be adjusted using a base as a pH modulator, such as an alkali hydroxide *(e.g.,* sodium hydroxide or calcium hydroxide) or an alkali metal salt of a carboxylate organic compound *(e.g.,* an alkali metal salt of citrate, such as di-sodium citrate), more preferably, an alkali hydroxide such as sodium hydroxide.

By "legume", it is meant a plant in the family Fabaceae, excluding the genus *Glycine.* Advantageously, a legume plant according to the invention belongs to a genus selected from the group consisting of *Cajanus (e.g.,* pigeon pea), *Cicer (e.g.,* chickpeas), *Lathyrus (e.g.,* grass pea or tuberous pea), *Lens (e.g.,* lentil), *Lupinus (e.g.,* lupin), *Phaseolus (e.g.,* kidney bean), *Pisum (e.g.,* green pea), *Vicia (e.g.,* fava bean) and *Vigna (e.g.,* mung bean), preferably *Pisum* and *Vicia.* In a preferred embodiment, the legume is a plant of the genus *Pisum sativum* (yellow pea) or *Vicia faba* (fava bean). For the sake of clarification, the term "legume" does not include the genus *Glycine,* in particular does not include soybean *(Glycine max),* which is generally classified as an oilseed.

By "legume seed protein" it is meant, in the present invention, a legume seed protein composition comprising between 10% to 100% by weight of crude proteins based on dry matter, from a legume plant seed. It can be in the form of a ground legume seed which can be a whole or (fully or partially) dehulled legume seed, a legume seed flour, a legume seed protein concentrate or a legume seed protein isolate.

The crude protein content of the legume seed protein can be measured following the Kjeldahl procedure (NF EN ISO 5983-2: 2009) with a nitrogen-to-protein conversion factor of 6.25.

Advantageously the legume seed protein can be a ground whole legume seed *(e.g., Pisum* seed) or a fraction thereof.

"Fraction of whole legume seed" means, in the present invention, a legume seed flour, a protein-rich fraction of a legume seed, a legume seed protein concentrate *(e.g.,* fava bean seed protein concentrate) or a legume seed protein isolate.

By "ground legume seeds", it is meant whole, partially dehulled, fully dehulled or split seeds (preferably *Pisum* seeds), which have been ground into powder. Said seeds have not been submitted to any further transformation steps such as an extraction, a fractionation and/or a grafting step(s). Preferably, the seeds have not been submitted to heat treatment at a temperature of at least 135°C, more preferably, at least 110°C, even more preferably, at least 80°C. As an example of an extraction step, fat, starch or protein extraction is performed. Therefore, ground legume seeds are not legume seed starch concentrate or isolate, or legume seed protein concentrate or isolate.

Using these ground legume seeds (preferably ground *Pisum* seeds) has the advantage of simplifying the preparation of an adhesive composition, since no extraction or fractionation of the legume seed is necessary such as to obtain, for example, starch or protein concentrates or isolates, which have previously been described for preparing biobased adhesive compositions. Furthermore, an adhesive composition according to the invention can be provided without having to modify the ground legume seeds, for example by an additional grafting step. Therefore, the production costs to prepare an adhesive composition according to the invention are reduced.

In addition, the ground legume seeds (preferably ground *Pisum* seeds) have the further advantage of having a lighter color (light yellow) than meals obtained from certain oleaginous plants (brown) such as sunflower seed meals or rapeseed meals, which will not affect the color of the final product.

Advantageously, the ground legume seeds implemented in the adhesive composition according to the invention belong to the genus *Pisum* and/or *Lathyrus,* more advantageously to the genus *Pisum.*

Preferably, the seeds belong to the species *Pisum sativum* and/or *Lathyrus aphaca,* more preferably, *Pisum sativum* (such as *Pisum sativum* L. known as yellow pea).

Advantageously, the ground legume seeds comprise between 10 wt% and 30 wt% of crude protein, preferably, between 20 wt% and 30 wt%, such as between 15 wt% and 25 wt%, on the total weight of the ground legume seeds.

Advantageously, the ground legume seeds comprise between 0.1 wt% and 20 wt% of oil, preferably, between 0.5 wt% and 12 wt%, more preferably, between 0.7 wt% and 5 wt% even more preferably, between 1.0 wt% and 2.0 wt%, on the total weight of the ground legume seeds.

The oil content of the ground legume seeds can be measured by extracting oil with a Soxhlet extractor using *n*-hexane as solvent, then, separating the hexane from oil by using a rotary evaporator at 68°C.

Advantageously, the ground legume seeds comprise between 30 wt% and 70 wt% of starch, preferably between 40 wt% and 60 wt% more preferably between 45 wt% and 55 wt%, on the total weight of the ground legume seeds.

The starch content of the ground legume seeds can be measured after amylolysis and using HPAEC (High Performance Anion Exchange Chromatography with Pulsed Amperometric detection) Analyses.

Advantageously, the ground legume seeds have a water (moisture) content comprised between 1 wt% and 20 wt%, preferably between 1 wt% and 15 wt%, more preferably, between 3 wt% and 10 wt%, on the total weight of the ground legume seeds.

Preferably, the legume seed protein is ground *Pisum sativum* seeds comprising between 15 wt% and 25 wt% of crude proteins on the total weight of the ground *Pisum sativum* seeds.

Legume seed protein concentrates usually comprise more than 60 wt% and less than 80 wt% crude proteins based on dry matter.

Legume seed protein isolates usually comprise more than 80 wt% crude proteins based on dry matter.

Legume seed protein concentrate and isolates can been obtained by dry and/or wet fractionation of the legume seed (see for review Chinwendu R. E. et al., 2022, Advances in legume protein extraction technologies: A review, Innovative Food Science & Emerging Technologies, Volume 82, 103199; and Onyango E., 2022, Legume Protein: Properties and Extraction for Food Applications, Legumes Research, Vol. 2. IntechOpen, Available at: http://dx.doi.org/10.5772/intechopen.100393). Legume seed protein concentrates and isolates are commercially available.

Advantageously, the legume seed protein concentrate in the adhesive composition according to the invention is obtained by dry-fractionation, such as by milling with subsequent air classification.

Preferably, the legume seed protein concentrate in the adhesive composition according to the invention belongs to the genus *Vicia,* more preferably to the species *Vicia faba* (known as fava bean). Even more preferably, the legume seed protein concentrate in the adhesive composition according to the invention is a *Vicia* (in particular *Vicia faba)* seed protein concentrate comprising between 60 wt% and 70 wt% of crude proteins on the total weight of the ground *Vicia* (in particular *Vicia faba)* seeds, in particular 65 wt%.

Advantageously, the legume seed proteins are micronized and optionally sieved legume seeds.

By "micronized", it is meant that the seeds have been ground to a particle size (Dv50) of at most 1000 $\mu$m. Micronization can be carried out using a pin mill, an attrition mill, an impact mill or a hammer mill.

Advantageously, micronization is followed by a sieving step to obtain the desired particle size of the legume seed proteins.

Preferably, the legume seed proteins have a granulometry Dv50 comprised between 1 $\mu$m and 1000 $\mu$m, more preferably, between 1 $\mu$m and 500 $\mu$m, even more preferably, between 1 $\mu$m and 200 $\mu$m, most preferably, between 10 $\mu$m and 90 $\mu$m.

Preferably, the legume seed proteins have a granulometry Dv90 comprised between 10 $\mu$m and 1500 $\mu$m, more preferably, between 50 $\mu$m and 800 $\mu$m.

In a preferred embodiment, the ground legume seeds have a granulometry Dv50 comprised between 1 $\mu$m and 200 $\mu$m, preferably, between 20 $\mu$m and 90 $\mu$m, and a granulometry Dv90 comprised between 50 $\mu$m and 800 $\mu$m.

The granulometry Dv50 and Dv90 are well-known by the skilled person respectively as the maximum size of 50%, or 90%, of the smallest particles in volume, and can be measured with a granulometer, for example according to the method described in the Example below.

By "animal albumin" it is meant albumin protein from animal origin. The animal albumins are a family of globular proteins which can be found in eggs, in particular egg whites (ovalbumin), milk (lactalbumin also called whey protein) or blood (serum albumin).

By "ovalbumin" it is meant the albumin protein from avian egg white, preferably from chicken (hen) egg white. Ovalbumin is the most abundant protein found in egg white (also called albumen) making up approximately 55% of the total protein of the egg white. Ovalbumin is a single protein with molecular weight of 45 kDa and an Isoelectric Point of 4.6. The native ovalbumin protein is a mixture of $\alpha$-helix and $\beta$-sheet. An advantageous source of ovalbumin is the egg white, preferably the chicken (hen) egg white. Advantageously also, the source of ovalbumin is not the whole egg or does not comprise the egg yolk. In particular, the egg white is not edible, for example because it is spoiled.

By "lactalbumin" it is meant the albumin protein present in milk of almost all mammalian species except in some Otariidae species such as the Northern fur seal. There are alpha and beta lactalbumins; both are contained in milk. An advantageous source of lactalbumin is the whey.

By "serum (or blood) albumin" it is meant the albumin protein present in blood of an animal, for example cattle, sheep, pig or horse. In particular, the serum albumin is the bovine serum albumin. An advantageous source of serum albumin is the bovine blood serum.

Preferably the animal albumin (preferably ovalbumin) or source of animal albumin is in the form of a powder (dried) having a water (moisture) content of less than 15% on the total weight. The egg white, whey or blood serum powder can be obtained by spray drying the egg white, whey or blood serum respectively into hot air within a dryer chamber.

In a preferred embodiment the animal albumin is the ovalbumin, lactalbumin or serum albumin, more preferably ovalbumin or lactalbumin, even more preferably ovalbumin.

Lignin can be an industrial lignin such as Kraft lignin (obtained from Kraft pulp wood), organosolv lignin (produced via organosolv process employing aqueous organic solvents as the cooking medium to treat lignocellulosic biomass) and soda lignin (obtained by a chemical process, where sodium hydroxide is used as an active chemical to produce pulp). Advantageously, lignin is not lignosulfonates which are byproducts from the production of wood pulp using sulfite pulping.

By "amine-based azetidinium-functional cross-linker", it is meant a cross-linker comprising amine and azetidinium group.

By "cross-linker", it is meant a compound or mixture of compounds comprising reactive groups.

Advantageously, the amine-based azetidinium-functional cross-linker implemented in the adhesive composition according to the invention is a polyamidoamine-epichlorohydrin (PAE), a polyalkylenepolyamine-epichlorohydrin (PAPAE), an amine polymer-epichlorohydrin (APE), or a combination thereof.

More preferably, the amine-based azetidinium-functional cross-linker is a polyamidoamine-epichlorohydrin (PAE).

Advantageously, the adhesive composition according to the invention does not comprise a formaldehyde-based prepolymer.

By "formaldehyde-based prepolymer", it is meant a prepolymer or mixture of prepolymers obtained from at least one monomer being formaldehyde.

Preferably, the adhesive composition according to the invention does not comprise a urea-formaldehyde resin, a melamine-formaldehyde resin, a melamine urea-formaldehyde resin, a phenol-formaldehyde resin, a phenol-resorcinol-formaldehyde, or a combination thereof. More preferably, this adhesive composition does not comprise a urea-formaldehyde resin, a phenol-formaldehyde resin, or a combination thereof.

Advantageously, the adhesive composition according to the invention does not comprise polyacrylamide, polyvinyl alcohol, polyvinyl acetate, borax, ammonium thiosulfate, urea, isocyanate, polyol or a mixture thereof. In particular, the adhesive composition according to the invention does not comprise urea to avoid any ammonia vapor release during the hot-pressing step of the plywood manufacturing process.

Advantageously, the weight ratio of the legume seed protein / amine-based azetidinium-functional cross-linker (dry weight / dry weight) is comprised between 0.1 and 5, preferably between 0.2 and 3, more preferably, between 0.5 and 3, even more preferably, between 0.7 and 2. In other words, the dry weight ratio of the legume seed protein / amine-based azetidinium-functional cross-linker is comprised between 0.1 and 5, preferably between 0.2 and 3, more preferably, between 0.5 and 3, even more preferably, between 0.7 and 2.

Advantageously, the weight ratio of animal albumin / amine-based azetidinium-functional cross-linker (dry weight / dry weight) is comprised between 0.05 and 5, preferably between 0.1 and 3, more preferably, between 0.1 (or 0.2) and 1, even more preferably, between 0.1 (or 0.2) and 0.8. In other words, the dry weight ratio of animal albumin / amine-based azetidinium-functional cross-linker is comprised between 0.05 and 5, preferably between 0.1 and 3, more preferably, between 0.1 (or 0.2) and 1, even more preferably, between 0.1 (or 0.2) and 0.8.

Advantageously, the weight ratio of lignin / amine-based azetidinium-functional cross-linker (dry weight / dry weight) is comprised between 0.025 and 3, preferably between 0.025 and 2, more preferably, between 0.05 and 1, even more preferably, between 0.05 and [0.5]. In other words, the dry weight ratio of lignin / amine-based azetidinium-functional cross-linker is comprised between 0.025 and 3, preferably between 0.025 and 2, more preferably, between 0.05 and 1, even more preferably, between 0.05 and 0.5.

Advantageously, the adhesive composition according to the invention comprises between 5 wt% and 60 wt% of the legume seed protein, based on the total weight of the adhesive composition, preferably, between 10 wt% and 40 wt%, more preferably, between 15 wt% and 30 wt%, based on the total weight of the adhesive composition.

Advantageously, the adhesive composition according to the invention comprises between 1 wt% and 30 wt% of the animal albumin and in particular of ovalbumin, based on the total weight of the adhesive composition, preferably, between 2 wt% and 20 wt%, more preferably, between 3 wt% and 10 wt%, based on the total weight of the adhesive composition.

Advantageously, the adhesive composition according to the invention comprises between 0.5 wt% and 15 wt% of the lignin and in particular of Kraft lignin, based on the total weight of the adhesive composition, preferably, between 1 wt% and 10 wt%, more preferably, between 2 wt% and 5 wt%, based on the total weight of the adhesive composition.

In a preferred embodiment the adhesive composition according to the invention comprises between 6 wt% and 60 wt% of the legume seed protein and animal albumin, based on the total weight of the adhesive composition, preferably, between 10 wt% and 50 wt%, more preferably, between 15 wt% and 30 wt%, based on the total weight of the adhesive composition.

In a preferred embodiment the weight ratio of the legume seed protein / animal albumin is comprised between 1 and 99, preferably between 1 and 50, more preferably, between 2 and 30, even more preferably, between 2 and 8 or between 2 and 6.

In a preferred embodiment the weight ratio of the legume seed protein / lignin is comprised between 0.5 and 40, preferably between 1 and 30, more preferably, between 1 and 20, even more preferably, between 2 and 15 or between 3 and 10.

Advantageously, the adhesive composition according to the invention comprises between 2 wt% and 20 wt% of the amine-based azetidinium-functional cross-linker, based on the total weight of the adhesive composition, preferably, between 2 wt% and 15 wt%, based on the total weight of the adhesive composition. In particular embodiments, the adhesive composition according to the invention comprises between 2 wt% and 12 wt% of the amine-based azetidinium-functional cross-linker, based on the total weight of the adhesive composition.

Advantageously, the adhesive composition according to the invention has a solid content of at least 20 wt%, preferably, at least 25 wt%, more preferably, at least 30 wt%, even more preferably, at least 35 wt%, based on the total weight of the adhesive composition.

Advantageously, the adhesive composition according to the invention has a solid content comprised between 20 wt% and 70 wt%, preferably, comprised between 30 wt% and 70 wt%, more preferably, comprised between 40 wt% and 60 wt%, even more preferably, comprised between 40 wt% and 55 wt%, based on the total weight of the adhesive composition.

By "solid content" of the adhesive composition, it is meant the percentage of dry solids contained in said composition. For example, if a composition is prepared by mixing ground legume seeds and water, the residual water already containing the legume seed protein (i.e., the water content of the legume seed protein) is taken into consideration for calculating the solid content of the composition.

In a particular embodiment, the adhesive composition according to the invention may comprise no additional additive. In other words, the aqueous adhesive composition according to the invention consists of:

- between 5 wt% and 60 wt% of legume seed protein, based on the total weight of the adhesive composition, wherein preferably the legume seed protein is either ground *Pisum sativum* seed comprising between 15 wt% and 25 wt% of crude proteins on the total weight of the ground *Pisum sativum* seed, or *Vicia faba* seed protein concentrate comprising between 60 wt% and 70 wt% of crude proteins on the total weight of the ground *Vicia faba* seeds,
- between 1 wt% and 30 wt% of an animal albumin (preferably ovalbumin), based on the total weight of the adhesive composition,
- between 0.5 wt% and 15 wt% of a lignin (preferably Kraft lignin), based on the total weight of the adhesive composition, and
- between 2 wt% and 20 wt% of an amine-based azetidinium-functional cross-linker (preferably polyamidoamine-epichlorohydrin cross-linker), based on the total weight of the adhesive composition.

The adhesive composition according to the invention can further comprise at least one additive. It should be noted that this or these additive(s) do(es) not contribute to the adhesive properties of the adhesive composition according to the invention. Accordingly, the present invention concerns a composition comprising an adhesive composition according to the present invention and at least one additive. The additive can be antifoaming agents, antimicrobial agents (such as oxidants, nisin), antibacterial agents (such as nitrogen derivatives), fungicides (such as sulphur-containing products).

In particular embodiments, the adhesive composition according to the invention may comprise urea.

The invention also relates to an aqueous adhesive composition comprising or consisting of:

- between 5 wt% and 60 wt% of a *Vicia* (preferably *Vicia faba)* seed protein, based on the total weight of the adhesive composition,
- between 1 wt% and 30 wt% of an animal albumin (preferably ovalbumin), based on the total weight of the adhesive composition,
- between 0.5 wt% and 15 wt% of a lignin (preferably Kraft lignin), based on the total weight of the adhesive composition,
- between 2 wt% and 20 wt% of an amine-based azetidinium-functional cross-linker (preferably polyamidoamine-epichlorohydrin cross-linker), based on the total weight of the adhesive composition,
- between 2 wt% and 15 wt% of urea,
- a base (e.g., NaOH), and
- optionally an additive.

According to this embodiment of the invention, the *Vicia* seed protein is preferably a *Vicia* (preferably *Vicia faba)* seed protein concentrate.

According to this embodiment, the *Vicia* seed protein, the animal albumin, the lignin, the amine-based azetidinium-functional cross-linker, and the optional additive are as described above.

The invention also relates to an aqueous adhesive composition comprising or consisting of:

- between 5 wt% and 60 wt% of a soybean *(Glycine max* seed) protein, based on the total weight of the adhesive composition,
- between 1 wt% and 30 wt% of an animal albumin (preferably ovalbumin), based on the total weight of the adhesive composition,
- between 0.5 wt% and 15 wt% of a lignin (preferably Kraft lignin), based on the total weight of the adhesive composition,
- between 2 wt% and 20 wt% of an amine-based azetidinium-functional cross-linker (preferably polyamidoamine-epichlorohydrin cross-linker), based on the total weight of the adhesive composition,
- between 1 wt% and 15 wt% of urea, and
- a base (e.g., NaOH), and
- optionally an additive.

According to this embodiment of the invention, the soybean protein can be soybean flour (or meal), soybean protein concentrate or soybean protein isolate, preferably soybean flour comprising between 40 wt% and 55 wt% of crude protein, preferably, between 45 wt% and 55 wt%, on the total weight of the ground soybean seeds.

According to this embodiment, the soybean protein, the animal albumin, the lignin, the amine-based azetidinium-functional cross-linker, and the optional additive are as described above.

The invention also relates to an aqueous adhesive composition comprising or consisting of:

- between 5 wt% and 60 wt% of a *Vicia* (preferably *Vicia faba)* seed protein, based on the total weight of the adhesive composition,
- between 1 wt% and 30 wt% of an animal albumin (preferably ovalbumin), based on the total weight of the adhesive composition,
- between 2 wt% and 20 wt% of an amine-based azetidinium-functional cross-linker (preferably polyamidoamine-epichlorohydrin cross-linker), based on the total weight of the adhesive composition,
- between 2 wt% and 15 wt% of urea,
- a base (e.g., NaOH), and
- optionally an additive.

According to this embodiment of the invention, the *Vicia* seed protein is preferably a *Vicia* (preferably *Vicia faba)* seed protein concentrate.

According to this embodiment, the *Vicia* seed protein, the animal albumin, the amine-based azetidinium-functional cross-linker, and the optional additive are as described above.

The invention also relates to an aqueous adhesive composition comprising or consisting of:

- between 5 wt% and 60 wt% of a legume seed protein and/or soybean *(Glycine max* seed) protein, based on the total weight of the adhesive composition, wherein the legume is not pea and is not of the genus *Pisum* and *Lathyrus,*
- between 1 wt% and 30 wt% of an animal albumin (preferably ovalbumin), based on the total weight of the adhesive composition,
- between 2 wt% and 20 wt% of an amine-based azetidinium-functional cross-linker (preferably polyamidoamine-epichlorohydrin cross-linker), based on the total weight of the adhesive composition, and
- a base (e.g., NaOH), and
- optionally an additive.

According to this embodiment of the invention, the legume seed protein is preferably a *Vicia* seed protein, more preferably a *Vicia* (preferably *Vicia faba)* seed protein concentrate.

According to this embodiment of the invention, the soybean protein can be soybean flour (or meal), soybean protein concentrate or soybean protein isolate, preferably soybean flour comprising between 40 wt% and 55 wt% of crude protein, preferably, between 45 wt% and 55 wt%, on the total weight of the ground soybean seeds.

According to this embodiment, the legume seed protein (wherein the legume is not pea and is not of the genus *Pisum* and *Lathyrus)* the soybean protein, the animal albumin, the amine-based azetidinium-functional cross-linker, and the optional additive are as described above.

According to this embodiment of the invention, this aqueous adhesive composition can be used to prepare a plywood, in particular a class 1 plywood (in reference to the European standards EN 314-1 and -2).

The adhesive composition according to the invention may be provided under a two-part form, wherein one part comprises the amine-based azetidinium-functional cross-linker and optionally water, and the other part comprises the legume seed protein, the animal albumin (preferably ovalbumin) and the lignin, and wherein the two parts are mixed together before use.

Preferably, upon curing, the adhesive composition according to the invention forms a solid binder.

Advantageously, the adhesive composition according to the invention is sprayable.

The invention also relates to a process for preparing the aqueous adhesive composition according to the invention as described above comprising the steps of:

- mixing the legume seed protein with the animal albumin and the lignin, as described above, to obtain a blend
- dispersing said blend into an amine-based azetidinium-functional cross-linker aqueous solution as described above, and
- optionally adjusting the pH at a value comprised between 9.5 and 12, as described above.

In addition, the invention relates to a plywood, in particular a class 2 plywood (in reference to the European standards EN 314-1 and -2), comprising the adhesive composition according to the invention and wood veneers, wherein at least 2 veneers, preferably all the veneers, are glued with the adhesive composition according to the invention.

The plywood can be a 3-, 5- or 7-plies (or layers) plywood.

Preferably, wood veneers for producing the plywood are okoume *(Aucoumea klaineana)* wood veneers.

The invention further relates to a process for preparing a plywood, in particular a class 2 plywood, comprising a step of contacting the adhesive composition according to the invention with a wood veneer to provide a wood veneer impregnated with the adhesive composition.

By "contacting" the adhesive composition with a lignocellulosic material, it is meant preferably applying by brush or roller, mixing or spraying, preferably by spraying.

Advantageously, the process for preparing the plywood further comprises a hot pressing step of the plies impregnated with the adhesive composition. Preferably, the pressing time is comprised between 4 min and 20 s/min, more preferably, between 6 min and 10 min , even more preferably, between 8 min and 11 min ,

Preferably, the process for preparing the plywood further comprises both the curing and pressing steps described before.

Advantageously, the process for preparing a plywood further comprises a step of curing the adhesive composition. Preferably, the curing is implemented by heating at a curing temperature comprised between 60°C and 180°C, more preferably, between 80°C and 160°C, even more preferably, between 105°C and 140°C.

More preferably, the curing and pressing steps are performed simultaneously.

The invention also relates to the use of the adhesive composition according to the invention to prepare plywood, in particular a class 2 plywood (in reference to the European standards EN 314-1 and -2).

It will be noted that in the context of the present application, and unless otherwise stipulated, the ranges of values indicated are understood to be inclusive.

By "about" a value, it is meant said value plus or minus 10%.

Contrary to the term "comprising", it is understood that the terms "consisting of" exclude the presence of any other additional compound.

Example:

1. Materials and methods

Materials

Whole yellow pea seeds *(Pisum sativum)* and hexane-extracted soybean meal were purchased from Sanders (France) and ground in order to respectively obtain micronized pea flour (PF) with a diameter of Dv10 of 7 $\mu$m, Dv-50 of 25 $\mu$m, and Dv90 of 77 $\mu$m and micronized soy flour (SF) with a diameter of Dv10 of 15 $\mu$m, Dv50 of 43 $\mu$m, and Dv90 of 115 $\mu$m. Fava beans (FB) was concentrate fava beans with a diameter of Dv10 of 5 $\mu$m, Dv50 of 12 $\mu$m, and Dv90 of 627 $\mu$m supplied by Vivien Paille (France) and used as receive.

Egg Whites (EW) were powdered egg withes supplied by Ovoteam (France) and lignin (KL) was from kraft process. Urea was granules (95% wt.wt dry content) purchased from Acros Organics and the polyamidoamine-epichlorohydrin Marenyl, PAE was supplied by Mare SpA (Milan, Italia). The PAE resin consisted in an aqueous solutions with a polymer solids content of 25% wt/wt.

A laboratory grinder from Retsch model ZM 200 was used for grinding. This equipment allows to get well-defined granulometry profile characterized by the Dv(50) value (size in microns that splits the distribution with half above and half below this diameter, in volume; in other words, Dv50 is the median particle size by volume). A ring sieve with 80 $\mu$m openings and mill speed of 18000 rpm were the conditions used to obtain the target particle size distribution d50 of about 30 $\mu$m.

Total crude proteins content of PF, SF and FB obtained using Kjeldahl procedure (NF EN ISO 5983-2 : 2009) with a nitrogen-to-protein conversion factor of 6.25 was 19.0% $\pm$ 1.6% wt/wt, 48.0% $\pm$ 1.4% wt/wt, and 65.0% $\pm$ 1.2 wt/wt, respectively.

The total oil content of PF, SF and FB was respectively 1.2% wt/wt; 2.0% wt/wt; 13.5% wt/wt. The oil content was measured as follows: oil was extracted with a Soxhlet extractor using n-hexane as solvent. Thereafter, the hexane was separated from oil by using a rotary evaporator at 68°C.

The moisture content of PF, SF and FB was respectively 7.7% wt/wt, 6.3% wt/wt and 9.4% wt/wt. The moisture contents were determined by placing about 1.5 g of material in an aluminum cup, the exact weight being measured with an analytical balance with 4 digits after the decimal point. Then the cup is placed in a fan ventilated oven at 105°C for 3h. Fan & valve aperture are set at 100% to accelerate water evaporation. The cup is weighted immediately after being removed from the oven or after conditioning in a desiccator to get sample at room temperature. Moisture content is obtained by calculating the percentage of material loss of the cup before being placed in the oven and after being placed in the oven.

**Adhesive composition comprising pea flour, PAE and lignin (PF$_{G1}$)**

Adhesive composition PF$_{G1}$ was prepared by mixing PF with KL and blending the powders with PAE solution. The composition of the adhesive system was calculated based on the whole adhesive composition including the moisture. Typically, 16 g of micronized pea flour was mixed with 3 g of lignin and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named PF$_{G1}$. The solid content of PF$_{G1}$ was 41.8% wt/wt.

**Adhesive composition comprising pea flour, PAE and egg whites (PF$_{G2}$)**

Adhesive composition PF$_{G2}$ was prepared by mixing PF with EW and blending the powders with PAE solution. The composition of the adhesive system was calculated based on the whole adhesive composition including the moisture. Typically, 16 g of micronized pea flour was mixed with 5,8 g of egg withes and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named PF$_{G2}$. The solid content of PF$_{G2}$ was 43.6% wt/wt.

**Adhesive composition comprising pea flour, PAE, egg withes and lignin (PF$_{G3}$)**

Adhesive composition PF$_{G3}$ was prepared by mixing PF with KL and EW and blending the powders with PAE solution. The composition of the adhesive system was calculated based on the whole adhesive composition including the moisture. Typically, 16 g of micronized pea flour was mixed with 5,8 g of egg withes and 3 g of lignin and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named PF$_{G3}$. The solid content of PF$_{G3}$ was 45.5 % wt/wt.

**Adhesive composition comprising pea flour, PAE, egg withes and urea and (PF$_{G5}$)**

Adhesive composition PF$_{G3}$ was prepared by mixing PF with EW and blending the powders with PAE solution comprising urea. The composition of the adhesive system was calculated based on the whole adhesive composition including the moisture. Typically, 9.8 g of urea was first dissolved into 66 g of PAE solution. Then, 16 g of micronized soy flour was mixed with 5,8 g of egg withes and then the blend was dispersed into PAE and urea mixture. The pH was adjusted to 10 with a 10M NaOH solution and the whole composition was mixed using dispersion blade for five minutes at 1000 rpm until obtaining an homogeneous formulation named PF$_{G3}$. The solid content of PF$_{G3}$ was 49.3% wt/wt.

### Adhesive composition comprising soy flour, PAE and lignin (SF$_{G1}$)

Adhesive composition SF$_{G1}$ was prepared by mixing SF with KL and blending the powders with PAE solution. The composition of the adhesive system was calculated based on the whole adhesive composition including the moisture. Typically, 16 g of micronized soy flour was mixed with 3 g of lignin and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named SF$_{G1}$. The solid content of SF$_{G1}$ was 41.8% wt/wt.

### Adhesive composition comprising soy flour, PAE and egg whites (SF$_{G2}$)

Adhesive composition SF$_{G2}$ was prepared by mixing SF with EW and blending the powders with PAE solution. The composition of the adhesive system was calculated based on the whole adhesive composition including the moisture. Typically, 16 g of micronized soy flour was mixed with 5,8 g of egg withes and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named SF$_{G2}$. The solid content of SF$_{G2}$ was 43.6% wt/wt.

### Adhesive composition comprising soy flour, PAE, egg withes and lignin (SF$_{G3}$)

Adhesive composition SF$_{G3}$ was prepared by mixing SF with KL and EW and blending the powders with PAE solution. The composition of the adhesive system was calculated based on the whole adhesive composition including the moisture. Typically, 16 g of micronized soy flour was mixed with 5,8 g of egg withes and 3 g of lignin and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named SF$_{G3}$. The solid content of SF$_{G3}$ was 45.5% wt/wt.

### Adhesive composition comprising soy flour, PAE, egg withes, urea and lignin (SF$_{G4}$)

Adhesive composition SF$_{G4}$ was prepared by mixing SF with KL and EW and blending the powders with PAE solution comprising urea. The composition of the adhesive system was calculated based on the whole adhesive composition including the moisture. Typically, 9.8 g of urea was first dissolved into 66 g of PAE solution. Then, 16 g of micronized soy flour was mixed with 5,8 g of egg withes and 3 g of lignin and then the blend was dispersed into PAE and urea mixture. The pH was adjusted to 10 with a 10M NaOH solution and the whole composition was mixed using dispersion blade for five minutes at 1000 rpm until obtaining an homogeneous formulation named SF$_{G4}$. The solid content of SF$_{G4}$ was 50.8% wt/wt.

### Adhesive composition comprising soy flour, PAE, egg withes and urea (SF$_{G3}$)

Adhesive composition SF$_{G3}$ was prepared by mixing SF with EW and blending the powders with PAE solution comprising urea. The composition of the adhesive system was calculated based on the whole adhesive composition including the moisture. Typically, 9.8 g of urea was first dissolved into 66 g of PAE solution. Then, 16 g of micronized soy flour was mixed with 5,8 g of egg withes and then the blend was dispersed into PAE and urea mixture. The pH was adjusted to 10 with a 10M NaOH solution and the whole composition was mixed using dispersion blade for five minutes at 1000 rpm until obtaining an homogeneous formulation named SF$_{G3}$. The solid content of SF$_{G3}$ was 49.3% wt/wt.

### Adhesive composition comprising fava beans, PAE and lignin (FB$_{G1}$)

Adhesive composition FB$_{G1}$ was prepared by mixing FB with KL and blending the powders with PAE solution. The composition of the adhesive system was calculated based on the whole adhesive composition including the moisture. Typically, 16 g of micronized fava beans was mixed with 3 g of lignin and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named FB$_{G1}$. The solid content of FB$_{G1}$ was 41.8% wt/wt.

### Adhesive composition comprising fava beans, PAE and egg whites (FB$_{G2}$)

Adhesive composition FB$_{G2}$ was prepared by mixing FB with EW and blending the powders with PAE solution.

The composition of the adhesive system was calculated based on the whole adhesive composition including the moisture. Typically, 16 g of micronized fava beans was mixed with 5,8 g of egg withes and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named $FB_{G2}$. The solid content of $FB_{G2}$ was 43.6% wt/wt.

**Adhesive composition comprising fava beans, PAE, egg withes and lignin ($FB_{G3}$)**

Adhesive composition $FB_{G3}$ was prepared by mixing FB with KL and EW and blending the powders with PAE solution. The composition of the adhesive system was calculated based on the whole adhesive composition including the moisture. Typically, 16 g of micronized fava beans was mixed with 5,8 g of egg withes and 3 g of lignin and then the blend was dispersed into 66 g of PAE solution. The pH was adjusted to 10 with a 10M NaOH solution and the whole composition was mixed using dispersion blade for five minutes at 1000 rpm until obtaining an homogeneous formulation named $FB_{G3}$. The solid content of $FB_{G3}$ was 45.5% wt/wt.

**Adhesive composition comprising fava beans, PAE, egg withes, urea and lignin ($FB_{G4}$)**

Adhesive composition $FB_{G4}$ was prepared by mixing FB with KL and EW and blending the powders with PAE solution comprising urea. The composition of the adhesive system was calculated based on the whole adhesive composition including the moisture. Typically, 9.8 g of urea was first dissolved into 66 g of PAE solution. Then, 16 g of micronized soy flour was mixed with 5,8 g of egg withes and 3 g of lignin and then the blend was dispersed into PAE and urea mixture. The pH was adjusted to 10 with a 10M NaOH solution and the whole composition was mixed using dispersion blade for five minutes at 1000 rpm until obtaining an homogeneous formulation named $FB_{G4}$. The solid content of $FB_{G4}$ was 50.8% wt/wt.

**Adhesive composition comprising fava beans, PAE, egg withes and urea ($FB_{G3}$)**

Adhesive composition $FB_{G5}$ was prepared by mixing FB with EW and blending the powders with PAE solution comprising urea. The composition of the adhesive system was calculated based on the whole adhesive composition including the moisture. Typically, 9.8 g of urea was first dissolved into 66 g of PAE solution. Then, 16 g of micronized soy flour was mixed with 5,8 g of egg withes and then the blend was dispersed into PAE and urea mixture. The pH was adjusted to 10 with a 10M NaOH solution and the whole composition was mixed using dispersion blade for five minutes at 1000 rpm until obtaining an homogeneous formulation named $FB_{G3}$. The solid content of $FB_{G5}$ was 49.3% wt/wt.

**Preparation of Plywood Panels**

The adhesive solutions were applied to both sides of a veneer [20 cm $\times$ 20 cm] using an adhesive roller-coater. The targeted glue spread rate was 110 g/cm$^2$ by face (total adhesive). 7-ply panels were made in such a way that the adhesive-coated veneer was stacked between two uncoated veneers with the grain directions of two neighboring veneers perpendicular to each other. The final thickness of the 7-layer plywood panels was 14 mm. Experiments were conducted on okoume (Aucoumea klaineana) wood veneers. After gluing step, the stacked veneers were hot-pressed at 3.5 metric tons (MeT) and 130°C using a CARVER hot press (platen of 20 cm $\times$ 20 cm) for 9.5 min. The panels were then stored at ambient temperature for at least 48 h before being cut and evaluated for their water resistance.

**Water Resistance of Plywood Panels**

The Bonding quality test was conducted according to the EN 314-1 (2004) standard. The suitability of the specimens for class 1 (indoor conditions) and 2 (covered outdoor conditions) was evaluated. Before the test, each panel was cut into six specimens with dimension of 100 mm $\times$ 25 mm. $PF_{G2}$, $SF_{G2}$ and $FB_{G2}$ were use for class 1 testing while all samples, were use for class 2 testing.

Testing for class 1 consisted in immersion of specimens in water for 24 h at 20°C $\pm$ 3°C and testing for class 2 consisted in immersion of the specimens for 6 h into boiling water, followed by cooling in water at 20°C $\pm$ 3°C for at least 1 h. The samples were tested on Intron 34TM-10 Universal machine (Instron Corps) at a constant crosshead displacement of 5 mm/min. The reported mean value of shear strength corresponds to the average of 6 specimens for each plywood. Each plywood must meet two criteria according to the EN 314-2 (1993) standard : average value of shear strength (fv) and average value of apparent cohesion failure (w) in the wood combined in the Table 1.

*Table 1: Requirements according to EN 314-2*

| Shear strength fv (N/mm²) | Apparent cohesive wood failure w (%) |
|---|---|
| $0.2 \leq fv < 0.4$ | 80 |
| $0.4 \leq fv < 0.6$ | 60 |
| $0.6 \leq fv < 1.0$ | 40 |
| $1.0 \leq fv$ | No requirement |

The shear strength fv (N/mm²) was calculated according to the formula :

$$Fv = \frac{F}{l1 \; x \; b1}$$

F (N) corresponds to the breaking load of test piece, l1 (mm) corresponds to the length of the shear surface and b1 (mm) the width of the shear surface. After the shear test, the apparent cohesive failure in the wood, w, was determined.
The shear strengths of plywood panels were evaluated according to EN 314-2 standard method (Table 2).

## 2. Results

Panels obtained with formulations $PF_{G2}$, $SF_{G2}$ and $FB_{G2}$ all met the requirements for class 1 plywood. Blending protein based raw material with egg withes and PAE allowed to obtain excellent panels for indoor conditions. Experiments have also been carried out for class 2 plywood for humid conditions. The results obtained showed that plywood prepared with formulations including protein-based raw material, lignin and PAE had zero or very low shear strength with an apparent cohesion factor w of 0%. These panels did not meet the requirements of class 2 plywood.
Formulations $PF_{G2}$, $SF_{G2}$ and $FB_{G2}$ showed higher strength with shear strength ranging between 0.36 N/mm² and 0.76 N/mm² depending on the raw material source. Among the raw materials, fava beans showed the highest strength with a shear strength of 0.76 N/mm². Regarding the cohesive mean wood feature and in accordance with the EN 314-2 standard, the $FB_{G2}$ adhesive system must have an apparent cohesion factor $w \geq 40\%$, but due to the lowest apparent cohesion factor, this plywood did not meet the requirements of class 2.
These results showed that formulations $PF_{G3}$, $SF_{G3}$ and $FB_{G3}$ prepared with protein raw materials, egg withes, lignin and PAE had even higher shear strength and almost all formulations met the requirements for class 2. The mixture with urea tends to increase the strength of the plywood so that formulation with soy flour $SF_{G4}$ also met the standard for class 2.
Formulations $PF_{G3}$, $SF_{G5}$ and $FB_{G5}$ were also prepared without lignin and consisted of a mixture of proteins, PAE, egg withes and urea. The use of PF and SF as protein sources in this formulation did not allow to obtain plywood that met the class 2 standard. However, plywood made with FB as a protein source had high shear strength of 1.25 N/mm². Thus, the formulation $FB_{G5}$ based on Fava bean, PAE, egg withes and urea is also a solution making it possible to obtain class 2 plywood.

*Table 2: Shear strength and wood failure for plywood panels bonded with the different adhesive systems*

|  | Adhesive system | Fv | w |
|---|---|---|---|
|  |  | (N/mm²) | (%) |
| **Class1[a]** | $PF_{G2}$ | $1.08 \pm 0.16$ | 7 |
|  | $SF_{G2}$ | $1.42 \pm 0.11$ | 8 |
|  | $FB_{G2}$ | $1.31 \pm 0.18$ | 35 |

(continued)

| Adhesive system | | Fv | w |
|---|---|---|---|
| | | (N/mm$^2$) | (%) |
| Class 2[b] | PF$_{G1}$ | 0.00 | 0 |
| | SF$_{G1}$ | 0.54 ± 0.06 | 0 |
| | FB$_{G1}$ | 0.65 ± 0.07 | 0 |
| | PF$_{G2}$ | 0.36 ± 0.15 | 0 |
| | SF$_{G2}$ | 0.57 ± 0.07 | 0 |
| | FB$_{G2}$ | 0.76 ± 0.12 | 17 |
| | PF$_{G3}$ | 0.77 ± 0.12 | 47 |
| | SF$_{G3}$ | 0.90 ± 0.11 | 0 |
| | FB$_{G3}$ | 0.94 ± 0.09 | 40 |
| | SF$_{G4}$ | 0.83 ± 0.08 | 67 |
| | FB$_{G4}$ | 0.94 ± 0.12 | 87 |
| | PF$_{G5}$ | 0.47 ± 0.15 | 0 |
| | SB$_{G5}$ | 0.92 ± 0.05 | 0 |
| | FB$_{G5}$ | 1.25 ± 0.10 | 0 |

[a]Interior conditions
[b]Humid conditions

## Claims

1. An aqueous adhesive composition comprising or consisting of:

   - a legume seed protein,
   - an animal albumin, preferably ovalbumin,
   - a lignin,
   - an amine-based azetidinium-functional cross-linker, and
   - a base.

2. Aqueous adhesive composition according to claim 1, comprising or consisting of:

   - between 5 wt% and 60 wt% of a legume seed protein, based on the total weight of the adhesive composition,
   - between 1 wt% and 30 wt% of an animal albumin, based on the total weight of the adhesive composition,
   - between 0.5 wt% and 15 wt% of a lignin, based on the total weight of the adhesive composition,
   - between 2 wt% and 20 wt% of an amine-based azetidinium-functional cross-linker, based on the total weight of the adhesive composition, and
   - a base.

3. Aqueous adhesive composition according to claim 1 or 2, wherein the amine-based azetidinium-functional cross-linker is polyamidoamine-epichlorohydrin (PAE), polyalkylenepolyamine-epichlorohydrin (PAPAE), amine polymer-epichlorohydrin (APE), or a combination thereof, preferably PAE.

4. Aqueous adhesive composition according to any one of claims 1 to 3, wherein the legume belongs to the belongs to a genus selected from the group consisting of *Cajanus, Cicer, Lathyrus, Lens, Lupinus, Phaseolus, Pisum, Vicia* and *Vigna,* preferably *Pisum* and *Vicia.*

5. Aqueous adhesive composition according to any one of claims 1 to 4, wherein the legume seed protein is a ground legume seed, a legume seed protein concentrate or a legume seed protein isolate.

6. Aqueous adhesive composition according to any one of claims 1 to 5, wherein the legume seed protein is a ground *Pisum sativum* seed or a *Vicia faba* seed protein concentrate.

7. Aqueous adhesive composition according to any one of claims 1 to 6, wherein the animal albumin is ovalbumin.

8. Aqueous adhesive composition according to any one of claims 1 to 7, wherein the lignin is Kraft lignin.

9. Aqueous adhesive composition according to any one of claims 1 to 8, having a solid content of at least 20 wt%, based on the total weight of the adhesive composition.

10. Aqueous adhesive composition according to any one of claims 1 to 9, wherein it has a pH value is at least 9.5, preferably comprised between 9.5 and 12.

11. Aqueous adhesive composition according to any one of claims 1 to 10, further comprising at least one additive.

12. Plywood comprising the adhesive composition according to any one of claims 1 to 11 and wood veneers.

13. Process for preparing the plywood according to claim 12, comprising a step of contacting the adhesive composition according to any one of claims 1 to 11 with a wood veneer to provide a wood veneer impregnated with the adhesive composition.

14. Use of the adhesive composition according to any one of claims 1 to 11 to prepare a plywood.

15. Use of the adhesive composition according to any one of claims 1 to 11 to glue wood veneer.

# EUROPEAN SEARCH REPORT

**Application Number**

EP 24 30 6973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2012 275 228 A1 (HERCULES INC) 19 December 2013 (2013-12-19) | 1,12-15 | INV. C09J189/00 |
| Y | * paragraph [0021] - paragraph [0024] * ----- | 1-15 | C09J197/00 C08L97/00 |
| Y | LUO JIANLIN ET AL: "A High Solid Content Bioadhesive Derived from Soybean Meal and Egg White: Preparation and Properties", JOURNAL OF POLYMERS AND THE ENVIRONMENT, SPRINGER NEW YORK LLC, US, vol. 25, no. 3, 20 October 2016 (2016-10-20), pages 948-959, XP036298261, ISSN: 1566-2543, DOI: 10.1007/S10924-016-0875-3 [retrieved on 2016-10-20] * Preparation of Adhesive; page 950 * ----- | 1-15 | C08L89/00 |
| Y | CN 106 164 207 A (DESIGN ADHESIVES INC) 23 November 2016 (2016-11-23) * page 6, paragraph 55 * * page 8, paragraph 67 - paragraph 68 * ----- | 1-15 | |

**TECHNICAL FIELDS SEARCHED (IPC)**

C09J
C08L

The present search report has been drawn up for all claims

| Place of search | Date of completion of the search | Examiner |
|---|---|---|
| Munich | 24 May 2025 | Mill, Sibel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6973

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2025

| Patent document cited in search report | Publication date | Patent family member(s) | Publication date |
|---|---|---|---|
| AU 2012275228 A1 | 19-12-2013 | AU 2012275228 A1 | 19-12-2013 |
| | | BR 112013033557 A2 | 07-02-2017 |
| | | CA 2839278 A1 | 03-01-2013 |
| | | CL 2013003710 A1 | 13-06-2014 |
| | | CN 103732710 A | 16-04-2014 |
| | | EP 2726568 A2 | 07-05-2014 |
| | | KR 20140044880 A | 15-04-2014 |
| | | RU 2014102888 A | 10-08-2015 |
| | | US 2013005867 A1 | 03-01-2013 |
| | | WO 2013003675 A2 | 03-01-2013 |
| | | ZA 201400697 B | 27-01-2016 |
| CN 106164207 A | 23-11-2016 | CN 106164207 A | 23-11-2016 |
| | | US 2015151449 A1 | 04-06-2015 |
| | | WO 2015084766 A1 | 11-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200804444 A1
- WO 2023089202 A1
- CN 102719217 A

**Non-patent literature cited in the description**

- Wood-Based Panels - An Introduction for Specialists, COST Office. Brunel University Press, 2010
- **FRIHART et al.** Ovalbumin as a wood adhesive. *The adhesion society's 37th annual meeting February, 23-26, 2014. San Diego, CA: Bahia Resort Hotel*, 2014, 1-3
- **CHINWENDU R. E. et al.** Advances in legume protein extraction technologies: A review. *Innovative Food Science & Emerging Technologies*, 2022, vol. 82, 103199
- Legume Protein: Properties and Extraction for Food Applications. **ONYANGO E.** Legumes Research. IntechOpen, 2022, vol. 2